# EUROPEAN PATENT APPLICATION

(11) **EP 1 445 945 A2**
(43) Date of publication of application: **11.08.2004**
(21) Application number: 04002560.3
(22) Date of filing: 05.02.2004
(51) Int. Cl.: H04N 5/45

(54) **Video display appliance capable of adjusting a sub-picture and method thereof**

(30) Priority: 07.02.2003 KR 2003007866
(71) Applicant: LG ELECTRONICS INC., Seoul 150-010 (KR)
(72) Inventor: Jeong, Seok Hwa, Kumi, Kyungsangbuk-Do (KR)
(74) Representative: Diehl, Hermann, Dr. Dipl.-Phys.

(57) **Abstract**

A video display appliance capable of adjusting a sub-picture independent from a main picture using an on-screen display menu in PIP mode and a method thereof are disclosed. The video display appliance includes a key input unit (170), provided with menu selection keys, vertical and horizontal adjustment buttons for adjusting the level of a selected menu, for receiving an input of a specified key signal, a main-picture signal processing unit (110) for processing a main-picture signal inputted from an outside source in the form of a signal that can be outputted to a display unit, a sub-picture signal processing unit (130) for processing a sub-picture signal inputted from an outside source in the form of a signal that can be outputted to the display unit, a micro-controller (150) for controlling operations of respective constituent elements of the video display appliance, a PIP processing unit (140) for superimposing a sub-picture signal outputted from a memory unit (190) on the main-picture signal outputted from the main-picture signal processing unit, and an on-screen display (OSD) output unit (100) for outputting an OSD menu in superimposition on the signal outputted from the PIP processing unit under the control of the micro-controller. The micro-controller outputs a sub-picture OSD adjustment menu for adjusting the sub-picture in the form of an OSD to the OSD output unit.

## Description

### Field of the Invention

The present invention relates to a video display appliance capable of adjusting a sub-picture, and more particularly, to a video display appliance that can adjust a sub-picture independently of a main picture using an on-screen display menu.

### Description of the Related Art

In related-art video display appliances such as television receivers, monitors, etc., various functions subject to control, e.g., volume, brightness, contrast, horizontal size, vertical size, horizontal position, vertical position, etc., can be adjusted using an OSD (On-Screen Display) menu.

With the development of digital technology, appliances having a PIP (Picture In Picture) function or POP (Picture Out Picture) function have been developed, thus enabling a plurality of pictures to be processed and displayed on the whole screen.

Generally, the purpose of the PIP function is to simultaneously display a main picture and a sub-picture on the whole screen, wherein in the sub-picture region of the screen, the main picture or another picture set by a user can be displayed.

The related-art method of adjusting various functions subject to control in the video display appliance using the OSD menu, however, can only perform the adjustment with respect to the whole screen. Thus, the sub-picture cannot be adjusted independently of the main picture. For example, if a user desires to adjust the vertical position of the sub-picture or to increase the horizontal size of the sub-picture, it is not possible as such an adjustment function has not yet been provided.

### SUMMARY OF THE INVENTION

The present invention is directed to a video display appliance capable of adjusting a sub-picture and a method thereof that substantially obviate one or more problems due to limitations and disadvantages of the related art.

It is an object of the present invention to provide a video display appliance that can adjust a sub-picture independently of a main picture using an on-screen display menu, and a method thereof.

To achieve these objects and other advantages in accordance with the purpose of the invention, as embodied and broadly described herein, there is provided a video display appliance capable of adjusting a sub-picture in a picture-in-picture (PIP) mode, comprising a key input unit, having menu selection keys, vertical and horizontal adjustment buttons for adjusting a level of a selected menu, for receiving an input of a specified key signal, a main-picture signal processing unit for processing a main-picture signal inputted from an outside in the form of signal that can be outputted to a display unit, a sub-picture signal processing unit for processing a sub-picture signal inputted from an outside source in the form of a signal that can be outputted to the display unit, a micro-controller for controlling operations of respective constituent elements of the video display appliance, a PIP processing unit for superimposing a sub-picture signal outputted from a memory unit on the main-picture signal outputted from the main-picture signal processing unit, and an on-screen display (OSD) output unit for outputting an OSD menu in superimposition on the signal outputted from the PIP processing unit under the control of the micro-controller, wherein the micro-controller outputs a sub-picture OSD adjustment menu for adjusting the sub-picture in the form of an OSD to the OSD output unit.

It is preferable that the sub-picture OSD adjustment menu comprises adjustable functions subject to control, and a changing amount display section for indicating an adjustment amount of the selected adjustable function subject to control.

It is also preferable that the functions subject to control that are displayed in the sub-picture OSD adjustment menu include at least one of a sub-picture horizontal size, a sub-picture vertical size, a sub-picture horizontal position, a sub-picture vertical position, a sub-picture brightness, a sub-picture contrast, and a thickness of a border line of the sub-picture.

It is also preferable that the changing amount display section displays the changing amount for a specified function subject to control as one of a variable histogram, a moving bar and an arrow.

According to another aspect of the present invention, there is provided a method of adjusting a sub-picture using an on-screen display (OSD) for a video display unit, comprising the steps of judging whether a sub-picture adjustment mode is selected by a user, if it is judged that the sub-picture adjustment mode is selected by the user, displaying a sub-picture OSD adjustment menu in a specified region of a screen, if one of functions subject to control is selected from the sub-picture OSD adjustment menu by the user, displaying a level adjustment display section in the sub-picture OSD adjustment menu, detecting manipulation of a vertical adjustment button or a horizontal adjustment button of a key input unit, and varying a level of the level adjustment display section in response to the button manipulation, and changing the corresponding function of the actual sub-picture as well as varying the level of the level adjustment section.

It is preferable that a manipulation direction of the vertical and horizontal adjustment buttons of the key input unit, a level-changing direction of the level adjustment display section, and an actual changing direction of the sub-picture coincide with one another.

It is also preferable that the functions subject to control that are displayed on the sub-picture OSD adjustment menu include at least one of a sub-picture horizontal size, a sub-picture vertical size, a sub-picture horizontal position, a sub-picture vertical position, a sub-picture brightness, a sub-picture contrast, and a thickness of a border line of the sub-picture.

It is also preferable that the level adjustment display section displayed in the sub-picture OSD adjustment menu displays a changing amount of the selected function subject to control using one of a level meter, an arrow and a numeral.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram illustrating the construction of a video display appliance capable of adjusting a sub-picture according to the present invention.

FIGs. 2a and 2b are views illustrating an example of the position where the sub-picture OSD menu is displayed according to the present invention.

FIG. 3 is a view illustrating an example of the sub-picture OSD adjustment menu according to the present invention.

FIGS. 4a and 4b are views illustrating the first and second examples of the level adjustment section of the sub-picture OSD adjustment menu according to the present invention.

FIGs. 5a and 5b are views illustrating the third and fourth examples of the level adjustment section of the sub-picture OSD adjustment menu according to the present invention.

FIGs. 6a to 6c are views illustrating the fifth to seventh examples of the level adjustment section of the sub-picture OSD adjustment menu according to the present invention.

FIG. 7 is a flowchart successively illustrating the process of adjusting a sub-picture in a video display appliance according to the present invention.

### DETAILED DESCRIPTION OF THE PREFERRED EMBODIMENT

Reference will now be made in detail to the preferred embodiment of the present invention, examples of which are illustrated in the accompanying drawings. Wherever possible, the same reference numbers will be used throughout the drawings to refer to the same or similar parts.

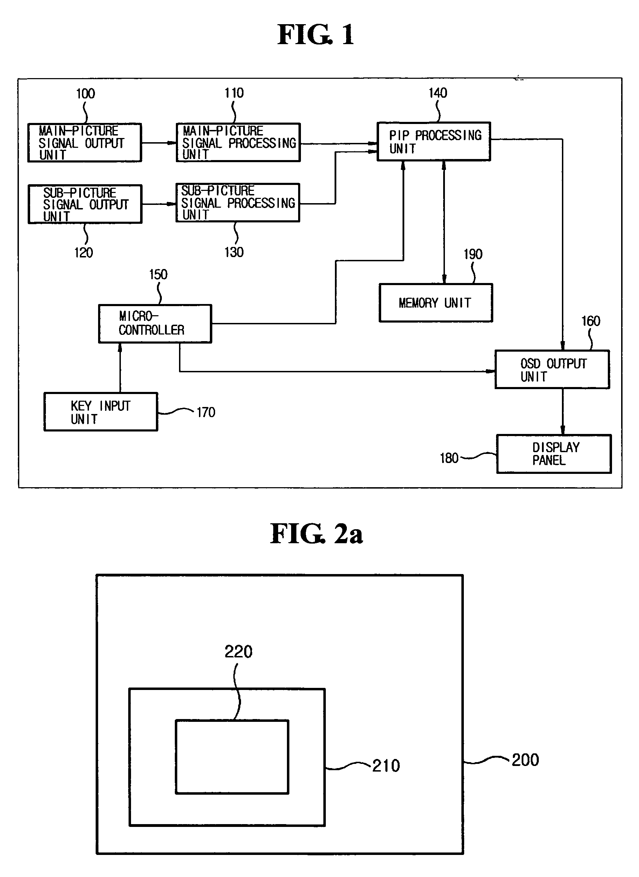

Hereinafter, the construction and operation of the video display appliance capable of adjusting a sub-picture according to the present invention will be explained in detail with reference to FIG. 1.

FIG. 1 is a block diagram illustrating the construction of a video display appliance capable of adjusting a sub-picture according to the present invention.

Referring to FIG. 1, the video display appliance capable of adjusting a sub-picture according to the present invention includes a main-picture signal output unit 100, a main-picture signal processing unit 110, a sub-picture signal output unit 120, a sub-picture signal processing unit 130, a PIP processing unit 140, a micro-controller 150, an OSD output unit 160, a key input unit 170, and a memory unit 190.

The main-picture signal output means 100 outputs a composite video signal for a main picture inputted from an outside source to the main-picture signal processing unit 110.

The main-picture signal processing unit 110 receives and separates the main-picture composite video signal inputted from the main-picture signal output means 100 into a luminance signal and a color signal, outputs a chrominance signal by decoding the separated luminance and color signals, and separates a vertical sync signal and a horizontal sync signal from the luminance signal.

The sub-picture signal output unit 120 outputs the composite video signal corresponding to the sub-picture to the sub-picture signal processing unit 130.

The sub-picture signal processing unit 130 receives and separates the sub-picture composite video signal inputted from the sub-picture signal output means 120 into a luminance signal and a color signal, outputs a chrominance signal by decoding the separated luminance and color signals, and separates a vertical sync signal and a horizontal sync signal from the luminance signal.

The memory unit 190 stores the luminance signal and the chrominance signal for the sub-picture that is outputted from the sub-picture signal processing unit 130.

The PIP processing unit 140 performs the PIP function by synchronizing the horizontal and vertical sync signals inputted from the sub-picture signal processing unit with the horizontal and vertical sync signals inputted from the main-picture signal processing unit, and reading out and outputting the chrominance signal and the luminance signal for the sub-picture that is stored in the memory in accordance with the synchronized horizontal and vertical sync signals.

The micro-controller 150 controls and manages the operations of the respective constituent elements of the video display appliance. The key input unit 170 is provided with a menu selection key, and vertical and horizontal adjustment buttons for adjusting the level of the selected menu, and transmits data on a key signal inputted from an outside source to the micro-controller.

The OSD output unit 160 outputs a sub-picture OSD adjustment menu for adjusting the sub-picture to a display panel 180 under the control of the micro-controller 150.

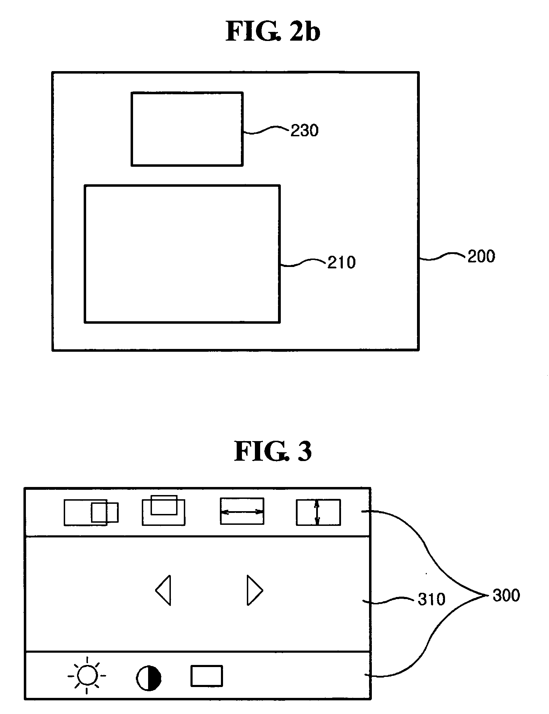

The sub-picture OSD adjustment menu 220 or 230 may be displayed in the sub-picture 210 as shown in FIG. 2a, or may be displayed in a specified position of a screen 200 that is set by a selection of the user as shown in FIG. 2b.

FIG. 3 is a view illustrating an example of the sub-picture OSD adjustment menu according to the present invention.

Referring to FIG. 3, the sub-picture OSD adjustment menu includes a function control display section 300 and a level adjustment display section 310.

The function control display section 300 is a region for displaying the functions subject to control for the sub-picture that can be adjusted through the OSD display, and includes at least one of a sub-picture horizontal size, a sub-picture vertical size, a sub-picture horizontal position, a sub-picture vertical position, a sub-picture brightness, a sub-picture contrast, and a thickness of a border line of the sub-picture.

The level adjustment display section 310 is a region for displaying a changing amount for a specified function selected by the user, and may be displayed as a level meter, an arrow, a percentage, and so on. Hereinafter, different examples of the level adjustment display section 310 will be explained with reference to the accompanying drawings.

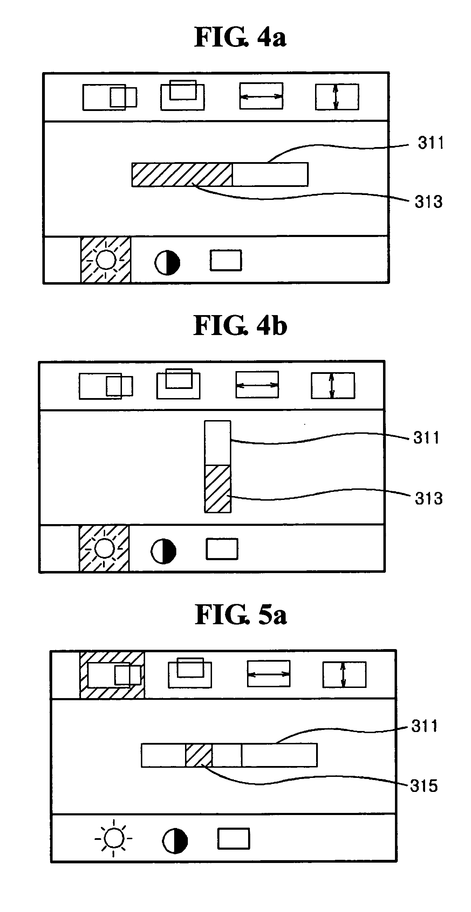

The first example of the level adjustment display section according to the present invention, as shown in FIG. 4a, uses a level meter 311 having a reference region of a rectangular form in a horizontal direction, and displays the changing amount of the respective function subject to control. A part of the reference region of the level meter 311 indicates a variable histogram 313 which varies in horizontal direction, that is, which increases from left to right or decreases from right to left, starting from the left end point of the reference region.

The second example of the level adjustment display section according to the present invention, as shown in FIG. 4b, uses a level meter 311 having a reference region of a rectangular form in a vertical direction, and displays the changing amount of the respective function subject to control. A part of the reference region of the level meter indicates a variable histogram 313' which varies in vertical direction, that is, which increases in an upward direction or decreases in a downward direction, starting from the bottom end point of the reference region.

It is preferable that the level meter displayed as the variable histogram in the horizontal direction is used to indicate the adjustment of the functions the functions of which are performed in the horizontal direction, for example, sub-picture horizontal size, sub-picture horizontal position, etc., while the level meter displayed as the variable histogram in the vertical direction is used to indicate the adjustment the function of which are performed in the vertical direction, for example, sub-picture vertical size, sub-picture vertical position, etc.

The third example of the level adjustment display section according to the present invention, as shown in FIG. 5a, uses a level meter 311" having a reference region of a rectangular form in a horizontal direction, and displays the changing amount of the respective function subject to control. A part of the reference region of the level meter indicates a moving bar 315 which moves horizontally, that is, which moves from left to right and vice versa, starting from the center line of the reference region.

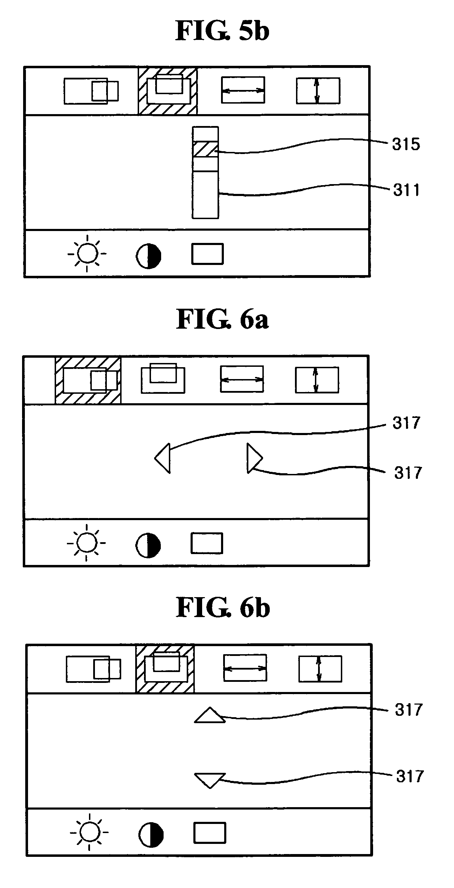

The fourth example of the level adjustment display section according to the present invention, as shown in FIG. 5b, uses a level meter 311a having a reference region of a rectangular form in a vertical direction, and displays the changing amount of the respective function subject to control. A part of the reference region of the level meter indicates a moving bar 315a which moves in the vertical direction, that is, which moves in upward and downward directions, starting from the center line of the reference region.

It is preferable that the level meter displayed as the moving bar moving in the horizontal direction is used to indicate the adjustment of the functions which are performed in the horizontal direction, for example, sub-picture horizontal size, sub-picture horizontal position, etc., while the level meter displayed as the moving bar moving in the vertical direction is used to indicate the functions the adjustment of which is performed in the vertical direction, for example, sub-picture vertical size, sub-picture vertical position, etc.

Meanwhile, the level meter displayed as the moving bar or the variable histogram in the horizontal direction is controlled using the horizontal adjustment button of the key input unit, and the level meter displayed as the moving bar or the variable histogram in the vertical direction is controlled using the vertical adjustment button of the key input unit. Consequently, all of the directions of the horizontal/vertical adjustment button of the key input unit for adjusting the level of the function subject to control of the sub-picture OSD adjustment menu, the direction of change of the level meter and the actual adjustment direction of the sub-picture can coincide with one another.

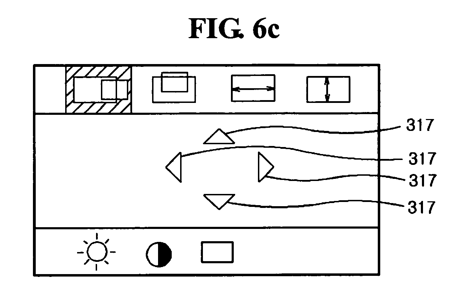

The fifth to seventh examples of the level adjustment display section according to the present invention, as shown in FIGS. 6a to 6c, use arrows 317 in left and right directions, in upward and downward directions 317', or in left, right, upward and downward directions. In the embodiment of the present invention, the level of the function that requires an adjustment in the horizontal direction is adjusted using the arrows in the left and right directions, and the level of the function that requires an adjustment in the vertical direction is adjusted using the arrows in the upward and downward directions.

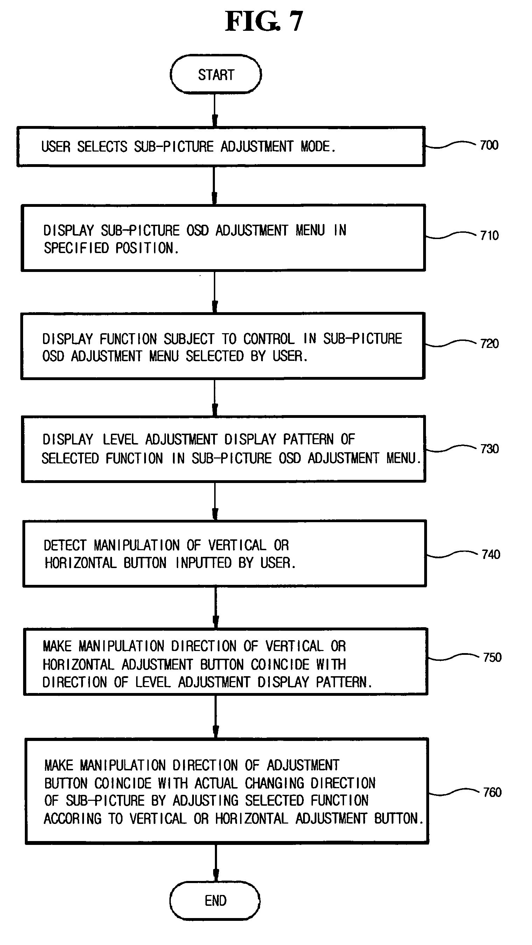

Now, the method of adjusting a sub-picture for a video display appliance having the above-described construction will be explained in detail with reference to FIG. 7.

FIG. 7 is a flowchart illustrating successively the process of adjusting a sub-picture in a video display appliance according to the present invention.

Referring to FIG. 7, if the user selects a sub-picture adjustment mode (step 700), a sub-picture OSD adjustment menu is displayed in a specified region of a screen (step 710). At this time, the sub-picture OSD adjustment menu may be displayed in a sub-picture region of the screen or in another region of the screen in accordance with a user's setting. In the sub-picture adjustment menu, at least one function subject to control is displayed. The user selects one of the functions subject to control using a menu selection key in the key input unit, and the selected function is displayed in highlighted form (step 720).

Next, a level adjustment display section for indicating the level of the function subject to control that is selected by the user and the increase/decrease of the level is displayed in the sub-picture OSD adjustment menu (step 730). Then, the user's manipulation of the horizontal or vertical adjustment button is detected (step 740), and the level adjustment display section changes in accordance with the degree of manipulation of the horizontal or vertical adjustment button (step 750). At this time, the level adjustment display section is varied so that the direction of manipulation of the horizontal or vertical adjustment button coincides with the direction of variation of the level adjustment display section. Then, in accordance with the user's manipulation of the horizontal or vertical adjustment button, the corresponding function subject to control of the sub-picture is adjusted in a state that the direction of manipulation of the horizontal or vertical adjustment button coincides with the actual direction of change or the changed position of the sub-picture (step 760).

As described above, according to the present invention, the user can adjust the horizontal/vertical size, horizontal/vertical position, brightness, contrast, and so on of the sub-picture through the sub-picture OSD adjustment menu. Also, the user can adjust the sub-picture to the same degree as the change of the level adjustment display section in the sub-picture OSD adjustment menu, and thus can easily adjust the sub-picture to the desired position or size as he/she is viewing the actual change of the sub-picture.

According to a preferred aspect of the invention, a video display appliance capable of adjusting a sub-picture independent from a main picture using an on-screen display menu in PIP mode and a method thereof are disclosed. The video display appliance includes a key input unit 170, provided with menu selection keys, vertical and horizontal adjustment buttons for adjusting the level of a selected menu, for receiving an input of a specified key signal, a main-picture signal processing unit 110 for processing a main-picture signal inputted from an outside source in the form of a signal that can be outputted to a display unit, a sub-picture signal processing unit 130 for processing a sub-picture signal inputted from an outside source in the form of a signal that can be outputted to the display unit, a micro-controller 150 for controlling operations of respective constituent elements of the video display appliance, a PIP processing unit 140 for superimposing a sub-picture signal outputted from a memory unit 190 on the main-picture signal outputted from the main-picture signal processing unit 110, and an on-screen display (OSD) output unit 100 for outputting an OSD menu in superimposition on the signal outputted from the PIP processing unit 140 under the control of the micro-controller 150. The micro-controller 150 outputs a sub-picture OSD adjustment menu (220;230) for adjusting the sub-picture in the form of an OSD to the OSD output unit.

The forgoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A video display appliance capable of adjusting a sub-picture in a picture-in-picture (PIP) mode, comprising:
a key input unit (170), provided with menu selection keys, vertical and horizontal adjustment buttons for adjusting a level of a selected menu, for receiving an input of a specified key signal;
a main-picture signal processing unit (110) for processing a main-picture signal inputted from an outside source in the form of signal that can be outputted to a display unit;
a sub-picture signal processing unit (130) for processing a sub-picture signal inputted from an outside in the form of a signal that can be outputted to the display unit;
a micro-controller (150) for controlling operations of respective constituent elements of the video display appliance;
a PIP processing unit (140) for superimposing a sub-picture signal outputted from a memory unit (190) on the main-picture signal outputted from the main-picture signal processing unit (110); and
an on-screen display (OSD) output unit (100) for outputting an OSD menu in superimposition on the signal outputted from the PIP processing unit (140) under the control of the micro-controller (150);
wherein the micro-controller (150) outputs a sub-picture OSD adjustment menu for adjusting the sub-picture in the form of an OSD to the OSD output unit.

2. The video display appliance of claim 1, wherein the sub-picture OSD adjustment menu (220,230) comprises adjustable functions (300) subject to control, and a changing amount display section (310) for indicating an adjustment amount of the selected adjustable function subject to control.

3. The video display appliance of claim 1 or 2, wherein the functions (300) subject to control that are displayed in the sub-picture OSD adjustment menu (160) include at least one of a sub-picture horizontal size, a sub-picture vertical size, a sub-picture horizontal position, a sub-picture vertical position, a sub-picture brightness, a sub-picture contrast, and a thickness of a border line of the sub-picture.

4. The video display appliance of one of claims 1 to 3, wherein the sub-picture OSD adjustment menu (220) is arranged in a sub-picture region.

5. The video display appliance of one of claims 1 to 4, wherein the sub-picture OSD adjustment menu is arranged in a position selected by a user.

6. The video display appliance of claim 2, wherein the changing amount display section displays the changing amount for a specified function subject to control as a variable histogram, a moving bar or arrows.

7. The video display appliance of claim 2, wherein in the case of displaying the changing amount display section using the variable histogram, the variable histogram is varied in a horizontal direction or in a vertical direction within a reference region, starting from a predetermined position of the reference region.

8. The video display appliance of claim 2, wherein in the case of displaying the changing amount display section using the moving bar, the moving bar is varied in a horizontal direction or in a vertical direction within a reference region, starting from a center line of the reference region.

9. The video display appliance of claim 2, wherein the changing amount display section of the sub-picture OSD adjustment menu indicates a level adjustment state in a vertical direction or in a horizontal direction in accordance with a kind of the function subject to control selected by a user.

10. The video display appliance of claim 2, wherein a level adjustment direction of the changing amount display section for the function subject to be controlled through the sub-picture OSD adjustment menu coincides with an actual changing direction of the sub-picture according to the adjustment.

11. A method of adjusting a sub-picture using an on-screen display (OSD) for a video display unit, comprising the steps of:
judging whether a sub-picture adjustment mode is selected by a user;
if it is judged that the sub-picture adjustment mode is selected by the user, displaying a sub-picture OSD adjustment menu in a specified region of a screen;
if one of functions subject to control is selected from the sub-picture OSD adjustment menu by the user, displaying a level adjustment display section in the sub-picture OSD adjustment menu;
detecting manipulation of a vertical adjustment button or a horizontal adjustment button of a key input unit, and varying a level of the level adjustment display section in response to the button manipulation; and
changing the corresponding function of the actual sub-picture as well as varying the level of the level adjustment section.

12. The method of claim 11, wherein a manipulation direction of the vertical and horizontal adjustment buttons of the key input unit, a level-changing direction of the level adjustment display section, and an actually changed direction of the sub-picture coincide with one another.

13. The method of claim 11 or 12, wherein the functions subject to control that are displayed on the sub-picture OSD adjustment menu include at least one of a sub-picture horizontal size, a sub-picture vertical size, a sub-picture horizontal position, a sub-picture vertical position, a sub-picture brightness, a sub-picture contrast, and a thickness of a border line of the sub-picture.

14. The method of one of claims 11 to 13, wherein the level adjustment display section displayed in the sub-picture OSD adjustment menu displays a changing amount of the selected function subject to control using a level meter, arrows or a numeral.

15. The method of claim 14, wherein a level meter of the level adjustment display section uses a variable histogram, or a moving bar in a horizontal or a vertical direction.
